# EUROPÄISCHE PATENTSCHRIFT

(11) **EP 4 036 512 B1**
(45) Veröffentlichungstag und Bekanntmachung des Hinweises auf die Patenterteilung: **22.11.2023**
(21) Anmeldenummer: 22153381.3
(22) Anmeldetag: 26.01.2022
(51) Int. Cl.: F28F 19/01, H01M 8/04029, F01P 11/02

(54) **SYSTEM ZUM BEREITSTELLEN EINER DRUCKBEAUFSCHLAGTEN FLÜSSIGKEIT**
SYSTEM FOR PROVIDING A PRESSURIZED LIQUID
SYSTÈME DE FOURNITURE D'UN LIQUIDE MIS SOUS PRESSION

(30) Priorität: 29.01.2021 DE 102021102107
(43) Veröffentlichungstag der Anmeldung: 03.08.2022
(73) Patentinhaber: Airbus Operations GmbH, 21129 Hamburg (DE)
(72) Erfinder: TRÜMPER, Torsten, 21129 Hamburg (DE); WARSCH, Christopher, 21129 Hamburg (DE); CASPARI, Jana, 21129 Hamburg (DE)

(56) Entgegenhaltungen:
- EP-A1- 0 536 470
- DE-T5-112014 006 218
- US-A1- 2010 154 467
- US-A1- 2016 036 071
- US-B1- 6 171 718

## Beschreibung

### TECHNISCHES GEBIET

Die Erfindung betrifft ein System zum Bereitstellen einer druckbeaufschlagten Flüssigkeit, eine Vorrichtung mit einer wärmeerzeugenden Einrichtung sowie ein Flugzeug. US 6 171 718 B1, z.B., offenbart ein System mit den Merkmalen im Oberbegriff des Patentanspruchs 1.

### HINTERGRUND DER ERFINDUNG

Zur Kühlung von technischen Vorrichtungen werden unter anderem Kühlsysteme mit einem flüssigen Kühlmittel eingesetzt. Das Kühlmittel wird dabei von einer Kühlmittelquelle bereitgestellt und einem mit der Vorrichtung in Kontakt stehenden Wärmetauscher zugeführt, sodass er dort Wärme aufnimmt. Anschließend wird die Flüssigkeit nach Durchlaufen einer geeigneten Wärmeabgabevorrichtung wieder der Kühlmittelquelle zugeführt. Durch ungleichmäßige Temperaturänderungen der Flüssigkeit ist mit Dichte- bzw. Volumenänderungen zu rechnen, die in einem geschlossenen Kühlkreislauf ausgeglichen werden müssen. Dies kann beispielsweise durch einen in dem Kühlkreislauf angeordneten Expansionstank erreicht werden. Bekannte Expansionstanks weisen einen Behälter mit einer Membran auf. Ein Teil des Volumens des Behälters wird mit Gas befüllt, das sich bis zu der Membran erstreckt. Auf der anderen Seite der Membran befindet sich die Flüssigkeit innerhalb des Behälters. Das Gas gewährleistet einen minimalen Druck in dem Kühlsystem und durch den Expansionstank können sehr leicht Volumenänderungen ausgeglichen werden.

Bei der Kühlung von Brennstoffzellen oder anderen empfindlichen Vorrichtungen ist allerdings ein Maximaldruck des Kühlmittels begrenzt. Die technische Umsetzung einer solchen Begrenzung würde jedoch einen sehr großen Expansionstank erfordern, der gerade bei kompakter Bauweise zu vermeiden ist. Mit bekannten Expansionstanks, insbesondere bei der Verwendung für Brennstoffzellen, die in Verkehrsmitteln eingesetzt werden, kann nicht gleichzeitig ein Maximaldruck begrenzt und ein Bauraum minimiert werden.

### ZUSAMMENFASSUNG DER ERFINDUNG

Es ist folglich eine Aufgabe der Erfindung, ein System zum Bereitstellen einer druckbeaufschlagten Flüssigkeit vorzuschlagen, bei dem ein Mindestdruck garantiert und ein statischer Druck durch Dichteänderung minimiert werden kann, wobei gleichzeitig der Bauraum so kompakt wie möglich sein sollte.

Die Aufgabe wird gelöst durch ein System mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein System zum Bereitstellen einer druckbeaufschlagten Flüssigkeit vorgeschlagen, aufweisend ein Reservoir zum Aufnehmen der Flüssigkeit mit einem Ablauf und einem Zulauf, eine Druckerhöhungseinrichtung, ein erstes Ventil, eine separate Filterkammer mit einem Einlass und mindestens einem Auslass, und einen kompressiblen, geschlossenen Pufferkörper, wobei die Druckerhöhungseinrichtung mit der Filterkammer gekoppelt ist und dazu ausgebildet ist, einen Druck der Flüssigkeit innerhalb der Filterkammer zu erhöhen, wobei das erste Ventil zwischen dem Zulauf des Reservoirs und der Filterkammer angeordnet ist und dazu ausgebildet ist, bei Erreichen oder Überschreiten eines Mindestdrucks der Flüssigkeit in der Filterkammer in Richtung des Reservoirs zu öffnen, und wobei der Pufferkörper in der Filterkammer angeordnet ist, sodass er von Flüssigkeit umgebbar ist.

Das Reservoir ist als ein eigenständiger Behälter mit einem bestimmten Aufnahmevolumen zu verstehen. Die Flüssigkeit kann über den Zulauf in das Aufnahmevolumen eintreten und dieses durch den Ablauf wieder verlassen. Das Reservoir ist nicht druckdicht geschlossen, sodass es sehr einfach in der Lage ist, eine variable Flüssigkeitsmenge aufzunehmen. Ein Restvolumen des Reservoirs ist mit Luft gefüllt, wobei das Restvolumen bevorzugt mit der Umgebung des Reservoirs in Fluidkontakt steht, um ein rasches Ein- bzw. Ausströmen zu erlauben. Das Reservoir könnte auch an anderen Stellen mit dem System verbunden sein.

Die Filterkammer ist als ein zumindest weitgehend geschlossener Behälter zu verstehen. Über den Einlass kann Flüssigkeit in die Filterkammer treten und aus dem mindestens einen Auslass wieder herausströmen, um Kühlaufgaben oder anderes wahrzunehmen. Die Filterkammer kann eine Einrichtung zum Filtern von Fremdkörpern aus der Flüssigkeit aufweisen, wie weiter nachfolgend im Detail erläutert.

Die Druckerhöhungseinrichtung kann als eine Pumpe ausgeführt sein, welche Flüssigkeit über den Ablauf aus dem Reservoir entnehmen kann, sie in die Filterkammer fördert und so den darin befindlichen Druck erhöhen kann. Alternativ dazu kann auch ein anderes Medium den Druck in dem Reservoir erhöhen, beispielsweise druckbeaufschlagte Luft, welche von einer entsprechenden Quelle in einer Entlüftungsöffnung des Reservoirs bereitstellbar ist. Die Quelle könnte etwa ein Luftzufuhrsystem für eine Brennstoffzelle sein. Zum Begrenzen des Drucks ist das erste Ventil vorgesehen, das bei einem vorgegebenen Mindestdruck öffnet und Flüssigkeit aus der Filterkammer in das Reservoir zurückströmen lässt. Der Mindestdruck ist derart vorgegeben, dass die vorgesehene Kühlanwendung auch an einer empfindlichen Vorrichtung sicher erfüllt wird, ohne einen vorgegebenen Druck zu überschreiten. Das erste Ventil könnte ein Rückschlagventil, ein steuerbares Ventil in Verbindung mit einem Drucksensor oder eine ähnliche Ventilkonstruktion aufweisen.

Der Pufferkörper in der Filterkammer wird durch den auf ihn einwirkenden Druck der Flüssigkeit komprimiert, sodass sich sein Volumen mit steigendem Druck verringert. Folglich wird das durch die Flüssigkeit einnehmbare, freie Volumen in der Filterkammer mit steigendem Druck vergrößert, sodass sehr effektiv Druckspitzen und andere Druckschwankungen vermieden werden können. Der Pufferkörper puffert bzw. vergleichmäßigt den Druck in der Filterkammer auch bei unterschiedlichen Volumenströmen über dem Einlass und dem mindestens einen Auslass und über verschiedene Betriebszustände der Druckerhöhungseinrichtung.

Die Verwendung der separaten Filterkammer, die bevorzugt ohnehin bereits für die Filterfunktion in einem Kühlkreislauf vorgesehen sein kann, erlaubt die Nutzung eines bereits vorhandenen, jedoch üblicherweise nur zum Filtern vorgesehenen Volumens zum Ausgleich von Dichteänderungen der Flüssigkeit, ohne den Bauraum des Kühlsystems oder einer anderen Anwendung insgesamt zu erhöhen. Mit optimierter Auslegung des Volumens des Reservoirs könnte sogar eine Verringerung des gesamten Bauraums erreicht werden.

In einer vorteilhaften Ausführungsform umfasst die Filterkammer einen Filtereinsatz, der eine perforierte Filterwandung aufweist, die in einem Abstand zu einer Außenwandung der Filterkammer verläuft. Der Filtereinsatz wird folglich im Wesentlichen durch eine Filterwandung gebildet, die in einem vorbestimmten Abstand zu einer Außenwandung der Filterkammer verläuft und für die Flüssigkeit durchlässig ist. Der Abstand zwischen der Außenwandung und der Filterwandung könnte derart dimensioniert sein, dass ein Spalt zwischen beiden verbleibt, in dem sich Flüssigkeit ungehindert ausbreiten und von dort leicht durch die Filterwandung fließen kann. Der Lochanteil der Perforation der Filterwandung ist bevorzugt so gewählt, dass der Filtereinsatz zu einem möglichst geringen zusätzlichen Strömungswiderstand führt. Die Perforationsöffnungen können eine Öffnungsweise im Mikrometerbereich aufweisen.

Der Einlass der Filterkammer mündet bevorzugt in dem Inneren des Filtereinsatzes, wobei der mindestens eine Auslass in der Außenwandung der Filterkammer angeordnet ist. Flüssigkeit, die über den Einlass in die Filterkammer gerät, strömt folglich direkt in den Filtereinsatz. Aus der Filterkammer ausströmende Flüssigkeit strömt indes aus einem Spalt zwischen dem Filtereinsatz und der Außenwandung heraus und wurde folglich durch die Filterwandung gefiltert.

In einer vorteilhaften Ausführungsform ist eine Filterkartusche in der Filterkammer in einem von dem Einlass abgewandten Bereich angeordnet. Die Filterkartusche kann eine zusätzliche Aufnahme bzw. Sammlung von Partikeln und anderen Fremdkörpern erreichen. Sie kann so platziert werden, dass in die Filterkammer einströmende Flüssigkeit zu der Filterkartusche gerät, um dort gefiltert wieder auszutreten. Sie könnte etwa direkt gegenüber des Einlasses angeordnet sein, beispielsweise im Bereich eines Bodens der Filterkammer, während der Einlass an einer Oberseite der Filterkammer angeordnet sein kann. Die Filterkartusche kann getrennt oder zusammen mit dem Filtereinsatz als ein austauschbares Element vorgesehen werden.

Es ist bevorzugt, wenn die Filterkartusche ein Ionenaustauschharz aufweist. Dies ist ein Material, welches als Medium für den Ionenaustausch dient. Es ist als eine unlösliche Matrix realisiert, die etwa in Form kleiner Mikrokügelchen aus einem organischen Polymersubstrat ausgebildet ist. Die Mikrokügelchen sind bevorzugt porös und weisen eine große Oberfläche auf, auf der und in der das Einfangen von Ionen zusammen mit der begleitenden Freisetzung anderer Ionen stattfindet.

In einer weiter vorteilhaften Ausführungsform ist der Pufferkörper außerhalb des Filtereinsatzes in der Filterkammer angeordnet. Der Pufferkörper wird folglich nicht direkt mit einer Flüssigkeitsströmung beaufschlagt. Zwischen dem Filtereinsatz und der Außenwandung der Filterkammer kann ein geeigneter Bereich ausgebildet werden, in dem der Pufferkörper angeordnet werden kann. Dieser Raum ist dabei bevorzugt so zu dimensionieren, dass auch bei Umgebungsdruck und dem daraus folgenden größten Volumen des Pufferkörpers sich dieser dort frei anordnen lässt.

Das System kann ferner einen Luftseparator aufweisen, der an einem oberen Ende der Filterkammer angeordnet ist und dazu ausgebildet ist, Luft aus der Filterkammer nach außen zu leiten. Der Luftseparator ist vorgesehen, um Luft aus der Filterkammer nach außen zu führen. Bei der Druckbeaufschlagung der Flüssigkeit und den dort vorzufindenden Strömungsbedingungen kann nicht ausgeschlossen werden, dass Luftbläschen in der Flüssigkeit vorliegen. Diese können in der Filterkammer entgegen der Schwerkraft nach oben treiben und dort in dem Luftseparator landen. Aus diesem können sie nach außen geführt werden.

Besonders bevorzugt ist das erste Ventil mit dem Luftseparator verbunden. Die Luftbläschen geraten daher aus dem Luftseparator durch das erste Ventil in das Reservoir, wo sie ebenso gegen die Schwerkraft nach oben treiben und sich in dem Restvolumen des Reservoirs ansammeln bzw. von dort in die Umgebung austreten. Zum gezielten Heraustreiben von Luftbläschen kann vorgesehen sein, die Druckerhöhungseinrichtung auch bei ausreichendem Druck in der Filterkammer zu betreiben, sodass der Druck so weit erhöht wird, dass das erste Ventil öffnet. Dann wird gezielt über den Luftseparator Luft nach außen geleitet.

Es könnte sich ein Luftfilter an einer Öffnung des Luftseparators und/oder des Reservoirs befinden, um das Eindringen von Partikeln von außen zu vermeiden.

In einer weiter vorteilhaften Ausführungsform ist der Einlass in einer oberen Begrenzungsfläche der Filterkammer angeordnet und in ein Zentrum der Filterkammer gerichtet. Die obere Begrenzungsfläche wird weiter nachfolgend auch Oberseite genannt. Durch diese Anordnung kann die einströmende Flüssigkeit abgebremst und großflächig durch die Filterkammer gefiltert werden.

Es ist vorteilhaft, wenn der Einlass mit einer Einlassleitung verbunden ist, wobei eine Bypassleitung mit der Einlassleitung verbunden ist. Die Bypassleitung könnte für eine Temperaturregelung eingesetzt werden. Beispielsweise kann in einem Kühlkreislauf ein Wärmetauscher vorgesehen sein, über den Wärme aus dem Kühlkreislauf nach außen abgegeben wird. Über einen Bypass kann der Wärmetauscher von einem Teil der Strömung umgangen werden, etwa um eine Temperatur in dem Kühlkreislauf zu erhöhen bzw. den Wärmeabtransport temporär zu reduzieren. Dies kann besonders sinnvoll sein, wenn das System mit einem Kühlsystem für eine Brennstoffzelle gekoppelt ist und die Brennstoffzelle hochgefahren und auf eine Betriebstemperatur gebracht werden muss.

Eine Bypassleitung könnte jedoch auch separat und direkt mit einer Begrenzungsfläche der Filterkammer verbunden sein und dort in einer entsprechenden Öffnung münden.

In einer vorteilhaften Ausführungsform ist die Druckerhöhungseinrichtung mit der Einlassleitung verbunden. Die Filterkammer erfordert aus diesem Grunde keinen zusätzlichen Einlass zum direkten Anschluss der Druckerhöhungseinrichtung, sondern sämtliche Flüssigkeitsquellen können über einen einzigen Einlass gesammelt in die Filterkammer geleitet werden.

Der Pufferkörper könnte eine elastische Hülle aufweisen, die ein Gasvolumen umschließt. Das Gasvolumen dient als federndes, kompressibles Element. Die Hülle könnte aus einem gummiartigen Element ausgebildet sein.

Besonders bevorzugt ist die Druckerhöhungseinrichtung eine Pumpe, insbesondere eine Impellerpumpe. Eine solche ist üblicherweise selbstansaugend und ist dafür geeignet, auch niedrigviskose Flüssigkeiten zu fördern. Es wäre auch denkbar, neben einer Pumpe zusätzlich druckbeaufschlagte Luft zu verwenden, wie weiter vorangehend beschrieben. Damit kann eine Redundanz erreicht werden.

Die Erfindung betrifft ferner eine Vorrichtung mit einer wärmeerzeugenden Einrichtung, einem mit der wärmeerzeugenden Einrichtung thermisch gekoppelten Wärmetauscher und einem System gemäß der vorhergehenden Beschreibung, wobei das System mit dem Wärmetauscher verbunden ist, sodass Flüssigkeit von dem System bereitgestellt und durch den Wärmetauscher förderbar ist. Die wärmeerzeugende Einrichtung könnte insbesondere ein Brennstoffzellensystem sein, das einen oder mehrere Brennstoffzellenstapel mit einzelnen Brennstoffzellen aufweist, welche eine Vielzahl von Kühlmittelkanälen aufweist. Diese können in Bipolarplatten oder direkt daran angrenzend angeordnet sein und werden von dem System mit der Flüssigkeit in Form eines Kühlmittels durchströmt. Hierzu ist eine Förderpumpe vorgesehen, die mit dem mindestens einen Auslass in Verbindung steht.

Schließlich betrifft die Erfindung ein Flugzeug, welches mindestens eine vorangehend genannte Vorrichtung und/oder ein vorangehend genanntes System aufweist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische Darstellung des erfindungsgemäßen Systems.
Fig. 2 zeigt eine schematische Ansicht einer Vorrichtung mit einer wärmeerzeugenden Einrichtung, die mit dem erfindungsgemäßen System gekoppelt ist.
Fig. 3 zeigt ein Flugzeug.

### DETAILLIERTE DARSTELLUNG EXEMPLARISCHER AUSFÜHRUNGSFORMEN

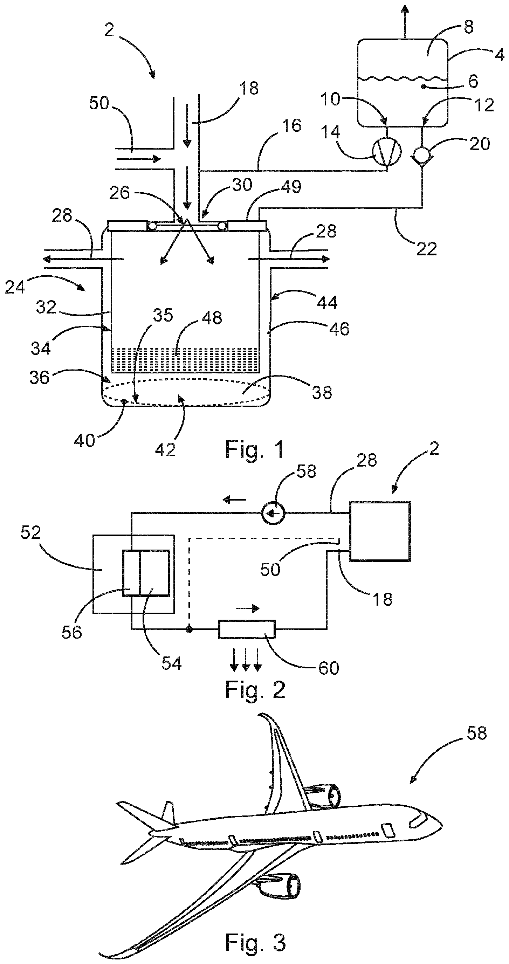

Fig. 1 zeigt ein System 2 zum Bereitstellen einer druckbeaufschlagten Flüssigkeit. Das System 2 weist ein Reservoir 4 zum Aufnehmen der Flüssigkeit auf. Das Reservoir 4 ist in dieser Darstellung mit einem Flüssigkeitsvolumen 6 gefüllt, während ein Restvolumen 8 mit Luft gefüllt ist. An einer Unterseite des Reservoirs 4 sind ein Ablauf 10 und ein Zulauf 12 angeordnet. Durch den Zulauf 12 kann Flüssigkeit in das Reservoir 4 einströmen. Über den Ablauf 10 kann es dem Reservoir 4 wieder entnommen werden.

An dem Ablauf 10 ist eine Impellerpumpe 14 als Druckerhöhungseinrichtung angeordnet, die dazu ausgebildet ist, Flüssigkeit aus dem Reservoir 4 zu entnehmen und in eine Zulaufleitung 16 zu fördern, die mit einer Einlassleitung 18 verbunden ist. An den Zulauf 12 ist ein erstes Ventil 20 angeordnet, das dazu ausgebildet ist, ab einem bestimmten Druck in Richtung des Reservoirs 4 zu öffnen. Es ist mit einer Ablaufleitung 22 verbunden.

Das System 2 weist ferner eine Filterkammer 24 auf, die einen Einlass 26 und beispielhaft zwei Auslässe 28 aufweist. Der Einlass 26 ist mit der Einlassleitung 18 verbunden. Die Einlassleitung 18 mündet in dieser Darstellung mittig und vertikal zu einer Oberseite 30 in der Filterkammer 24, sodass Flüssigkeit aus der Einlassleitung 18 in Richtung eines Zentrums der Filterkammer 24 gerichtet ist. Dadurch wird die Einströmgeschwindigkeit der Flüssigkeit reduziert.

In der Filterkammer 24 ist ein Filtereinsatz 32 angeordnet, der eine Filterwandung 32 besitzt. Diese ist perforiert und erstreckt sich von der Oberseite 30 der Filterkammer 24 bis zu einer bestimmten Höhe über einer Bodenfläche 35 der Filterkammer 24, sodass ein Zwischenraum 36 unterhalb des Filtereinsatzes 32 frei bleibt. Dort ist ein Pufferkörper 38 angeordnet, welcher eine elastische Hülle 40 besitzt, die ein Gasvolumen 42 umschließt. Die Filterkammer 24 weist eine Außenwandung 44 auf, die mit der Außenwandung 34 des Filtereinsatzes 32 einen Spalt 46 einschließt. Flüssigkeit, die durch den Einlass 26 in den Filtereinsatz 32 gerät, wird durch Perforationsöffnungen in der Filterwandung 34 den Auslässen 28 zugeführt.

An einer Unterseite des Filtereinsatzes 32 ist eine Filterkartusche 48 angeordnet, die ein Ionenaustauscherharz aufweist. Flüssigkeit kann die Filterkartusche 48 durchströmen, sodass Partikel dort gesammelt werden.

An der Oberseite 30 der Filterkammer 24 ist ein Luftseparator 49 angeordnet. Dieser könnte ein ringförmiger Sammelbehälter sein, der in Richtung der Bodenfläche 35 zumindest bereichsweise offen ist. Luftbläschen, die in der Filterkammer 24 vorliegen und schwerkraftbedingt zu der Oberseite 30 wandern, gelangen in den Luftseparator 49. Dieser ist mit der Ablaufleitung 22 verbunden und kann folglich über das erste Ventil 20 in das Reservoir 4 geraten. Wird die Impellerpumpe 14 betrieben, wird der Druck innerhalb der Filterkammer 24 erhöht. Beim Erreichen eines bestimmten Drucks öffnet das erste Ventil 20, sodass der Druck in der Filterkammer 24 hierdurch begrenzt wird. Dadurch kann ein maximal Druck innerhalb der Filterkammer 24 gewährleistet werden. Das Öffnen des ersten Ventils 20 kann jedoch auch die in dem Luftseparator gesammelte Luft aus der Filterkammer 24 abführen. Es ist vorstellbar, die Impellerpumpe 14 mit einer Steuereinheit (nicht gezeigt) zu verbinden, die zu vorgegebenen Zeitpunkten eine Druckerhöhung durchführt, um daher jeweils die Luft gezielt abzuführen.

Die Einlassleitung 18 ist weiterhin mit einer Bypassleitung 50 verbunden, durch die wärmere Flüssigkeit in die Einlassleitung 18 und damit den Einlass 26 gerät. Dies kann zur Verbesserung der Temperaturregelung eingesetzt werden.

Fig. 2 zeigt eine Vorrichtung 52 mit einer wärmeerzeugenden Einrichtung 54, wobei ein Wärmetauscher 56 mit der Wärme erzeugenden Einrichtung 54 gekoppelt ist. Eine Förderpumpe 58 fördert die Flüssigkeit aus einem oder beiden der Auslässe 28 des Systems 2 durch den Wärmetauscher 56, sodass die Flüssigkeit dort Wärme der Vorrichtung 52 aufnimmt. Im weiteren Verlauf strömt die erwärmte Flüssigkeit durch eine Wärmeabgabeeinrichtung 60, wo sie Wärme an die Umgebung abgeben kann. Anschließend strömt die Flüssigkeit zurück in die Einlassleitung 18 des Systems. Ist gewünscht, die Einrichtung 54 auf eine Betriebstemperatur zu bringen und anschließend durch Kühlung die Betriebstemperatur zu halten, kann die Wärmeabgabeeinrichtung durch eine Verbindung mit der Bypassleitung 50 zumindest teilweise umgangen werden. Die entsprechende Verbindungslinie ist gestrichelt gezeichnet. Es könnte dort ein steuerbares zweites Ventil vorliegen und gegebenenfalls ein Rückschlagventil. Die Einrichtung 54 könnte beispielsweise ein Brennstoffzellensystem sein.

Fig. 3 zeigt ein Flugzeug 62, in dem eine Vorrichtung 52 wie in Fig. 2 gezeigt und/oder ein System 2 wie in Fig. 1 gezeigt angeordnet ist.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: System
- 4: Reservoir
- 6: Flüssigkeitsvolumen
- 8: Restvolumen
- 10: Ablauf
- 12: Zulauf
- 14: Druckerhöhungseinrichtung / Impellerpumpe
- 16: Zulaufleitung
- 18: Einlassleitung
- 20: erstes Ventil
- 22: Ablaufleitung
- 24: Filterkammer
- 26: Einlass
- 28: Auslass
- 30: Oberseite / obere Begrenzungsfläche
- 32: Filtereinsatz
- 34: Filterwandung
- 35: Bodenfläche
- 36: Zwischenraum
- 38: Pufferkörper
- 40: elastische Hülle
- 42: Gasvolumen
- 44: Außenwandung
- 46: Spalt
- 48: Filterkartusche
- 49: Luftseparator
- 50: Bypassleitung
- 52: Vorrichtung
- 54: wärmeerzeugende Einrichtung
- 56: Wärmetauscher
- 58: Förderpumpe
- 60: Wärmeabgabeeinrichtung
- 62: Flugzeug

## Patentansprüche

1. System (2) zum Bereitstellen einer druckbeaufschlagten Flüssigkeit, aufweisend:
- ein Reservoir (4) zum Aufnehmen der Flüssigkeit mit einem Ablauf (10) und einem Zulauf (12),
- eine Druckerhöhungseinrichtung (14),
- ein erstes Ventil (20),
- eine separate Filterkammer (24) mit einem Einlass (26) und mindestens einem Auslass (28), und
- einen kompressiblen, geschlossenen Pufferkörper (38),
wobei die Druckerhöhungseinrichtung (14) mit der Filterkammer (24) gekoppelt ist und dazu ausgebildet ist, einen Druck der Flüssigkeit innerhalb der Filterkammer (24) zu erhöhen,
wobei das erste Ventil (20) zwischen dem Zulauf (12) des Reservoirs (4) und der Filterkammer (24) angeordnet ist und dazu ausgebildet ist, bei Erreichen oder Überschreiten eines Mindestdrucks der Flüssigkeit in der Filterkammer (24) in Richtung des Reservoirs (4) zu öffnen, und
**dadurch gekennzeichnet, dass** der Pufferkörper (38) in der Filterkammer (24) angeordnet ist, sodass er von Flüssigkeit umgebbar ist.

2. System (2) nach Anspruch 1,
wobei die Filterkammer (24) einen Filtereinsatz (32) umfasst, der eine perforierte Filterwandung (34) aufweist, die in einem Abstand zu einer Außenwandung (44) der Filterkammer (24) verläuft.

3. System (2) nach Anspruch 2,
wobei der Einlass (26) der Filterkammer (24) in dem Inneren des Filtereinsatzes (32) mündet und der mindestens eine Auslass (28) in der Außenwandung (44) der Filterkammer (24) angeordnet ist.

4. System (2) nach einem der vorhergehenden Ansprüche,
wobei eine Filterkartusche (48) in der Filterkammer (24) in einem von dem Einlass (26) abgewandten Bereich angeordnet ist.

5. System (2) nach Anspruch 4,
wobei die Filterkartusche (48) ein Ionenaustauschharz aufweist.

6. System (2) nach Anspruch 2,
wobei der Pufferkörper (38) außerhalb des Filtereinsatzes (32) in der Filterkammer (24) angeordnet ist.

7. System (2) nach einem der vorhergehenden Ansprüche,
ferner aufweisend einen Luftseparator (49), der an einem oberen Ende der Filterkammer (24) angeordnet ist, und der dazu ausgebildet ist, Luft aus der Filterkammer (24) nach außen zu leiten.

8. System (2) nach Anspruch 7,
wobei das erste Ventil (20) mit dem Luftseparator (49) verbunden ist.

9. System (2) nach einem der vorhergehenden Ansprüche,
wobei der Einlass (26) in einer oberen Begrenzungsfläche (30) der Filterkammer (24) angeordnet und in ein Zentrum der Filterkammer (24) gerichtet ist.

10. System (2) nach einem der vorhergehenden Ansprüche,
wobei der Einlass (26) mit einer Einlassleitung (18) verbunden ist, und wobei eine Bypassleitung (50) mit der Einlassleitung (18) verbunden ist.

11. System (2) nach Anspruch 10,
wobei die Druckerhöhungseinrichtung (14) mit der Einlassleitung (18) verbunden ist.

12. System (2) nach einem der vorhergehenden Ansprüche,
wobei der Pufferkörper (38) eine elastische Hülle (40) aufweist, die ein Gasvolumen (42) umschließt.

13. System (2) nach einem der vorhergehenden Ansprüche,
wobei die Druckerhöhungseinrichtung (14) eine Pumpe, insbesondere eine Impellerpumpe (14) ist.

14. Vorrichtung (52) mit einer wärmeerzeugenden Einrichtung (54), einem mit der wärmeerzeugenden Einrichtung (54) thermisch gekoppelten Wärmetauscher (56) und einem System (2) nach einem der vorhergehenden Ansprüche, wobei das System (2) mit dem Wärmetauscher (56) verbunden ist, sodass Flüssigkeit von dem System (2) bereitgestellt und durch den Wärmetauscher (56) förderbar ist.

15. Flugzeug (62), aufweisend mindestens eine Vorrichtung nach Anspruch 14 und/oder mindestens ein System (2) nach einem der Ansprüche 1 bis 13.

## Claims

1. A system (2) for providing a pressurized liquid, comprising:
- a reservoir (4) for holding the liquid having an outlet (10) and an inlet (12),
- a pressure boosting device (14),
- a first valve (20),
- a separate filter chamber (24) having an inlet (26) and at least one outlet (28), and
- a compressible, closed buffer body (38),
wherein the pressure boosting device (14) is coupled to the filter chamber (24) and is adapted to increase a pressure of the fluid within the filter chamber (24),
wherein the first valve (20) is arranged between the inlet (12) of the reservoir (4) and the filter chamber (24) and is adapted to open towards the reservoir (4) when a minimum pressure of the liquid in the filter chamber (24) is reached or exceeded, and
**characterized in that** the buffer body (38) is arranged in the filter chamber (24) so that it can be bypassed by liquid.

2. System (2) according to claim 1,
wherein the filter chamber (24) comprises a filter insert (32) having a perforated filter wall (34) extending at a distance from an outer wall (44) of the filter chamber (24).

3. System (2) according to claim 2,
wherein the inlet (26) of the filter chamber (24) opens into the interior of the filter insert (32) and the at least one outlet (28) is arranged in the outer wall (44) of the filter chamber (24).

4. system (2) according to any one of the preceding claims,
wherein a filter cartridge (48) is arranged in the filter chamber (24) in a region facing away from the inlet (26).

5. System (2) according to claim 4,
wherein the filter cartridge (48) comprises an ion exchange resin.

6. System (2) according to claim 2,
wherein the buffer body (38) is disposed outside the filter cartridge (32) in the filter chamber (24).

7. System (2) according to any one of the preceding claims,
further comprising an air separator (49) disposed at an upper end of the filter chamber (24) and adapted to direct air outwardly from the filter chamber (24).

8. System (2) according to claim 7,
wherein the first valve (20) is connected to the air separator (49).

9. System (2) according to any one of the preceding claims,
wherein the inlet (26) is arranged in an upper boundary surface (30) of the filter chamber (24) and is directed into a center of the filter chamber (24).

10. System (2) according to any one of the preceding claims,
wherein the inlet (26) is connected to an inlet line (18), and wherein a bypass line (50) is connected to the inlet line (18).

11. System (2) according to claim 10,
wherein the pressure boosting device (14) is connected to the inlet line (18). is connected.

12. System (2) according to any one of the preceding claims,
wherein the buffer body (38) comprises an elastic envelope (40) enclosing a gas volume (42).

13. System (2) according to any one of the preceding claims,
wherein the pressure boosting device (14) is a pump, in particular an impeller pump (14).

14. An apparatus (52) comprising a heat generating device (54), a heat exchanger (56) thermally coupled to the heat generating device (54), and a system (2) according to any one of the preceding claims, wherein the system (2) is connected to the heat exchanger (56) such that fluid is provided by the system (2) and is conveyable through the heat exchanger (56).

15. An aircraft (62) comprising at least one device according to claim 14 and/or at least one system (2) according to any one of claims 1 to 13.

## Revendications

1. Un système (2) pour fournir un liquide sous pression, comprenant :
- un réservoir (4) destiné à contenir le liquide et comportant une sortie (10) et une entrée (12),
- un dispositif d'augmentation de la pression (14),
- une première soupape (20),
- une chambre de filtration séparée (24) avec une entrée (26) et au moins une sortie (28), et
- un corps tampon fermé compressible (38),
dans lequel le dispositif d'augmentation de pression (14) est couplé à la chambre de filtration (24) et est adapté pour augmenter une pression du liquide à l'intérieur de la chambre de filtration (24),
dans lequel la première soupape (20) est disposée entre l'entrée (12) du réservoir (4) et la chambre de filtration (24) et est conçue pour s'ouvrir en direction du réservoir (4) lorsqu'une pression minimale du liquide dans la chambre de filtration (24) est atteinte ou dépassée, et **caractérisé en ce que** le corps tampon (38) est disposé dans la chambre de filtration (24) de manière à pouvoir être contourné par le liquide.

2. Système (2) selon la revendication 1,
dans lequel la chambre de filtration (24) comprend une cartouche filtrante (32) présentant une paroi de filtration perforée (34) s'étendant à distance d'une paroi extérieure (44) de la chambre de filtration (24).

3. Système (2) selon la revendication 2,
dans lequel l'entrée (26) de la chambre de filtration (24) débouche à l'intérieur de l'élément filtrant (32) et l'au moins une sortie (28) est située dans la paroi extérieure (44) de la chambre de filtration (24).

4. Système (2) selon l'une quelconque des revendications précédentes, dans lequel une cartouche de filtration (48) est disposée dans la chambre de filtration (24) dans une zone opposée à l'entrée (26).

5. Système (2) selon la revendication 4,
dans lequel la cartouche filtrante (48) comprend une résine échangeuse d'ions.

6. Système (2) selon la revendication 2,
dans lequel le corps tampon (38) est disposé à l'extérieur de la cartouche filtrante (32) dans la chambre de filtration (24).

7. Système (2) selon l'une quelconque des revendications précédentes,
comprenant en outre un séparateur d'air (49) disposé à une extrémité supérieure de la chambre de filtration (24) et adapté pour évacuer l'air de la chambre de filtration (24) vers l'extérieur.

8. Système (2) selon la revendication 7,
dans lequel la première vanne (20) est reliée au séparateur d'air (49).

9. Système (2) selon l'une quelconque des revendications précédentes,
dans lequel l'entrée (26) est disposée dans une surface de délimitation supérieure (30) de la chambre de filtration (24) et est dirigée vers un centre de la chambre de filtration (24).

10. Système (2) selon l'une des revendications précédentes,
dans lequel l'entrée (26) est reliée à un conduit d'entrée (18), et dans lequel un conduit de dérivation (50) est relié au conduit d'entrée (18).

11. Système (2) selon la revendication 10,
dans lequel le dispositif d'augmentation de pression (14) est relié à la conduite d'entrée (18). est relié à la pompe.

12. Système (2) selon l'une quelconque des revendications précédentes,
dans lequel le corps tampon (38) comprend une enveloppe élastique (40) qui renferme un volume de gaz (42).

13. Système (2) selon l'une des revendications précédentes,
dans lequel le dispositif d'augmentation de la pression (14) est une pompe, en particulier une pompe à impulseur (14).

14. Un appareil (52) comprenant un dispositif de génération de chaleur (54), un échangeur de chaleur (56) couplé thermiquement au dispositif de génération de chaleur (54) et un système (2) selon l'une quelconque des revendications précédentes, dans lequel le système (2) est connecté à l'échangeur de chaleur (56) de sorte que le liquide est fourni par le système (2) et peut être transporté à travers l'échangeur de chaleur (56).

15. Un aéronef (62) comprenant au moins un dispositif selon la revendication 14 et/ou au moins un système (2) selon l'une quelconque des revendications 1 à 13.
